# EUROPÄISCHE PATENTANMELDUNG

(11) **EP 4 242 245 A1**
(43) Veröffentlichungstag der Anmeldung: **13.09.2023**
(21) Anmeldenummer: 22161661.8
(22) Anmeldetag: 11.03.2022
(51) Int. Cl.: C08G 16/02, C08L 61/00, C08L 89/00, C14C 3/20, C14C 3/28

(54) **HERSTELLUNG UND VERWENDUNG VON PEPTID- UND/ODER PROTEINMODIFIZIERTEN POLYPHENOLISCHEN PRODUKTEN**

(71) Anmelder: TFL Ledertechnik GmbH, 79618 Rheinfelden (DE)
(72) Erfinder: Rabe, Volker, 51375 Leverkusen (DE); Konrad, Michael, 51371 Leverkusen (DE); Bley, Matthias, 42697 Solingen (DE); SONG, Ma, Beverley Yorkshire, HU17 8XG (GB)
(74) Vertreter: Mertzlufft-Paufler, Cornelius

(57) **Zusammenfassung**

Die Erfindung betrifft einen Gerbstoff, umfassend als gerbende Komponente eine synthetische peptidmodifizierte polyphenolische Gerbstoffzusammensetzung, erhältlich indem
(i) ein Hydrolysat mittels einer basischen, enzymatischen oder sauren Hydrolyse von peptid- und/oder proteinhaltigen Materialien hergestellt und mit
- durch eine Kondensation eines Aldehydes mit einer Sulfonsäuregruppen beinhaltenden aromatischen Verbindung in freier und/oder Salzform erhaltenen - Sulfonsäuregruppen beinhaltenden kondensierten aromatischen Verbindung in freier und/oder Salzform versetzt wird, und
das Gemisch einer Kondensation mit einem Aldehyd zu einem Kondensat, der synthetischen peptidmodifizierten polyphenolischen Gerbstoffzusammensetzung, unterzogen wird,
oder
(ii) ein Kondensat, erhältlich, indem ein peptid- und/oder proteinhaltiges Material
in einem ersten Schritt einer Vorbehandlung mittels einer Sulfonsäuregruppen beinhaltenden monomeren aromatischen Verbindung und einer ersten Kondensation zu einem Vorkondensat in Gegenwart eines Aldehyds oder einer Kombination von Aldehyd und Harnstoff unterzogen wird, und
in einem zweiten Schritt das Vorkondensat anschließend mit einem Aldehyd und einer weiteren, monomeren aromatischen Verbindung in Form von Phenol oder einem Phenolderivat und/oder mit mindestens einer monomeren Sulfonsäuregruppen beinhaltenden aromatischen Verbindung, in freier und/oder Salzform, einer weiteren Kondensation unterzogen wird.

## Beschreibung

Die Erfindung betrifft spezielle synthetische peptidmodifizierte polyphenolische Gerbstoffzusammensetzungen als Gerbstoffe, deren Herstellung sowie deren Verwendung zum Gerben von Häuten und Fellen und die dadurch erhältlichen Leder und Pelze.

Beim Gerben werden Kollagenfasern aus Tierhaut gegen bakteriellen oder pilzlichen Abbau vernetzt. Gängige Gerbstoffe sind Chromsulfat, Glutardialdehyd, pflanzliche Gerbstoffe oder synthetische Gerbstoffe. Die synthetischen Gerbstoffe, auch Synthane oder Syntane, genannt, sind meist durch Sulfonierung oder Sulfomethylierung löslich gemachte Aldehyd-Kondensationsprodukte aromatischer Grundkörper, insbesondere von Phenol, Kresol, Naphthalin und Naphthol. Besonders bevorzugt sind Kondensate aus Naphthalinsulfonsäuren, Phenolsulfonsäure, Diphenylsulfonen oder sulfonierten Diarylethern mit Formaldehyd und/oder Harnstoff. Solche Kondensate sind bekannt beispielsweise aus Herfelds (Herausgeber) "Bibliothek des Leders", Bd. 3, Seite 53 bis 59, Umschau-Verlag 1984 oder Reich, G. Theorie und Praxis der organischen Gerbstoffe, Teil 2: Synthetische organische Gerbstoffe, Das Leder, 1996, 157-171 und können nach den dort in den angegebenen Referenzen beschriebenen Verfahren hergestellt werden.

Seit der Einführung der ersten synthetischen Gerbstoffe (Synthane) vor über hundert Jahren hat sich die Rolle der Synthane im Gerbprozess deutlich verändert. Steigende technische Anforderungen an die Lederqualität konnten durch Veränderung ihrer Chemie erreicht werden. Während die Synthane anfänglich als Dispergiermittel und Hilfsmittel für pflanzliche Gerbstoffe verwendet wurden, konnten sie nach Änderung ihrer Chemie diese als alleinige Gerbstoffe ganz oder teilweise verdrängen. Ein Vorteil dieser chemisch hergestellten Synthane gegenüber den pflanzlichen Gerbstoffen ist Ihre gleichbleibende Qualität, welche bei den pflanzlichen Gerbstoffen schwanken kann. Des Weiteren können bei der Synthese gezielt deren Eigenschaften eingestellt werden, um unterschiedliche Vorteile bei deren Ledertechnischen Anwendung zu erzielen, wie z. B. die Weichheit oder die Oberflächenbeschaffenheit der mit diesen Mitteln hergestellten Leder. Ein weiterer Vorteil sind die oftmals verbesserte Echtheiten (Stabilität der Farbe) der Leder gegenüber Hitze und Licht. Bei Einsatz von pflanzlichen Gerbstoffen sind die damit hergestellten Leder und Häute nicht ausreichend lichtecht und hitzebeständig, d.h. sie vergilben leicht und verändern ihre Farbe mit der Zeit. Ein weiterer Unterschied zwischen Synthanen und pflanzlichen Gerbstoffen ist die Art der Zusammensetzung. Synthane bestehen, als Polymere, zwar aus einer Mischung von unterschiedlich großen Molekülen, deren chemische Basis ist aber ähnlich, sodass diese eine relativ einheitlich Vermittlung von Eigenschaften gewährleisten. Im Gegensatz dazu bestehen pflanzliche Gerbstoffe aus einer relativ komplizierten Mischung von Gerbstoffen, Halbgerbstoffen und Nichtgerbstoffen. Die Nichtgerbstoffe nehmen zwar nicht am Gerbvorgang teil, beeinflussen aber die gerberischen Eigenschaften der pflanzlichen Gerbstoffe. So werden diese unter anderem während des Gerbvorganges in losere Teile einer Haut mit geringerer Dichte der Lederfasern eingelagert und füllen dort die Räume aus. Dies hat den Vorteil, dass dadurch die Flächenstruktur eines fertigen Leders einheitlicher wird und dadurch mehr von dieser Fläche zur Herstellung von Endartikeln wie beispielweise Schuhen genutzt werden kann. Auf der anderen Seite wird beim Einsatz als Alleingerbstoff dieser Nichtgerbstoffanteil zum Nachteil gegenüber den Synthanen, da größere Mengen zum Gerben notwendig sind und durch die eingelagerten Nichtgerbstoffe oft relativ schwere Leder entstehen.

Als Maß für die Gerbung gilt die hydrothermische Stabilität der Leder, die sogenannte Schrumpfungstemperatur. Gemessen werden kann diese nach Methode DIN 53336:1977-01. Die Schrumpfungstemperatur einer ungegerbten Haut liegt bei etwa 55 - 60° C. Eine Erhöhung darüber hinaus (z.B: auf 65 ° C oder höher) zeigt Gerbung an, so liegt bspw. bei einer Gerbung mit Synthanen oder pflanzlichen Gerbstoffen die Schrumpfungstemperatur je nach Typ bei 70 - 85° C. Bevorzugte Ausführungsformen der Erfindung betreffen entsprechend definierte Gerbprodukte mit einer Schrumpfungstemperatur von 65 °C oder höher;

Mit der breiten Akzeptanz der Chromsulfat- oder Glutardialdehydgerbung hat sich der Einsatz sowohl von pflanzlichen Gerbstoffen wie auch der Synthane heutzutage verschoben, und diese werden hauptsächlich im Nachgerbprozess eingesetzt. In diesem Prozessschritt sind die Kollagenfasern schon vernetzt, und somit steht weniger die Gerbwirkung als vielmehr die Feinsteuerung der gewünschten Ledereigenschaften im Fokus. Auch hier können mit Synthanen aufgrund der einheitlicheren chemischen Basis die Eigenschaften der Leder gezielter gesteuert werden. Der Effekt der Nichtgerbstoffe von pflanzlichen Gerbstoffen, losere Teile der Haut zu füllen, was für eine einheitlichere Dicke in der gesamten Lederfläche sorgt, kann jedoch nicht im gleichen Masse erreicht werden. Hierzu müssen größere Mengen an Synthanen oder meist andere Produkte in der Nachgerbung eingesetzt werden, welche auf einer anderen chemischen Basis beruhen, wie zum Beispiel Harzgerbstoffe oder andere Polymere (z.B. Acrylate). Ein weiterer Nachteil besteht in der Tatsache, dass alle diese synthetischen Produkte erdölbasiert sind und somit dem Wunsch nach einer nachhaltigeren Leder-Wertschöpfungskette entgegenstehen.

Es hat nicht an Versuchen gefehlt, die Nachteile sowohl technischer wie auch ökologischer Natur der heutigen Synthane zu überwinden und einen Teil der Inhaltsstoffe durch nachwachsende Materialien zu ersetzen.

Eine schon lange in der Industrie genutzte Möglichkeit bietet die Kondensation von Ligninsulfonsäuren und Aromaten mit Hilfe von Formaldehyd. [Günther Reich, Grundzüge der Herstellung aromatischer Syntane, Das Leder, 1957, S. 229-237). Da Ligninsulfonsäure ein Nebenprodukt der Zellstoffindustrie ist, steht dieses in großen Mengen und relativ günstig zur Verfügung. Hierbei wird der Dispergierende Effekt dieser Verbindung ausgenutzt. Ein Nachteil der so hergestellten Synthane besteht in der geringen Diffusionsgeschwindigkeit in die Haut und damit verbunden einer relativ geringen Gerbgeschwindigkeit.

Im Patent EP 3453728 A1 (Patent Smit and Zoon) wird die Lignin-Modifikation eines Polyphenolischen Produktes beschrieben. Hierbei wird wasserunlösliches Lignin mithilfe von Formaldehyd oder Glyoxylsäure zusammen mit einem Polyphenol kondensiert. Der erhaltene Stoff hat laut genanntem Patent eine Gerbwirkung erkennbar an der Erhöhung der hydrothermischen Stabilität der Leder (Schrumpfungstemperatur) auf 75°C beim Einsatz in der Gerbung als (Co-)Gerbstoff zusammen mit einem Napthalinsulfonsäure enthaltenden synthetischen Gerbstoff in der (Vor-)gerbung von Häuten (Beispiel 4 im Patent). Des Weiteren kann mit diesem Stoff beim Einsatz als Nachgerbstoff für chromgegerbtes Schuhoberleder ein Leder mit ausgezeichneter Fülle erhalten werden. Nachteile dieses Systems sind der relativ hohe Preis des Lignins und die schlechte Stabilität gegenüber Licht dieses Ausgangsstoffes, was zu einer schlechteren Lichtechheit der damit hergestellten Leder führt.

Eine andere Möglichkeit ist der teilweise Ersatz von aromatischen Verbindungen in einem Synthan durch Proteinhydrolysate. So wird im Patent MX 2009007196A die Herstellung eines Füllers zum Einsatz in der Nachgerbung von Leder beschrieben. Dieser Füller ist eine Mischung aus hauptsächlich Kollagenproteinhydrolysat und Napthalinsulfonsäure. Das Kollagenhydrolysat wird dabei durch das Auflösen von chromfreien Lederfalzspänen, einem Abfallstoff der Lederherstellung, durch die Napthalinsulfonsäure gewonnen. Die entstehende Mischung wird in der Nachgerbung eingesetzt, um die loseren Teile der Haut zu füllen. Diese Mischung hat aber wenn überhaupt dann nur sehr geringe Gerbwirkung und verbessert neben der Fülle der Leder nur bedingt andere gewünschte Ledereigenschaften wie zum Beispiel die Weichheit oder die Festnarbigkeit der Leder.

Ein anderes Beispiel für die Herstellung eines Füllers zum Einsatz in der Lederbehandlung wird in der Patentschrift CN 105586444 B beschrieben. Hierbei wird das Produkt in der ersten Stufe durch Auflösen von chromhaltigen Falzspänen mit Phenolsulfonsäure gewonnen. Anschließend wird die entstehende Mischung mit Formaldehyd und ggf. Harnstoff kondensiert.Beim Einsatz des entstehenden Produktes in der Nachgerbung von Kuh-Spalten konnte eine Dickenzunahme von 35% gemessen werden. Auch dieses Produkt hat wenn überhaupt dann nur sehr geringe Gerbwirkung (siehe Junqing Zhang et al., 2018, J. Soc. Leather Technol. Chem.), Volume 102, Seite 194 -199) und verbessert außer der Fülle auch keine anderen gewünschten Ledereigenschaften wie zum Beispiel die Weichheit oder die Festnarbigkeit der Leder. Wie nun überraschend gefunden wurde, kann aufgrund des erhältlichen Verhältnisses von Sulfonsäuregruppen zu OH-Gruppen im Produkt nur sehr geringe Gerbwirkung erhalten werden.

Somit besteht eine Aufgabe der Erfindung darin, ein einfaches Verfahren zur Herstellung eines synthetischen Gerbstoffes zu finden welches teilweise auf der Verwendung von nachwachsenden Rohstoffen beruht, die hydrothermische Stabilität von Leder oder Haut verbessert und oben beschriebene Nachteile des Stands der Technik vermeidet.

Überraschend wurde nun gefunden, dass diese Aufgabe gelöst werden kann durch Kondensation von peptid- und/oder proteinhaltigen Materialien in Form von deren Hydrolysaten und aromatischen monomeren Verbindungen (beispielweise Phenol, Kresol (z.B. o-, m- oder p-Kresol oder Gemische davon), Ditolylether, Naphthalin, Naphthol, Brenzcatechin, Resorcin, Hydrochinon, Hydroxyhydrochinon, Phloroglucin, Pyrogallol, o-Kresol, m-Kresol oder p-Kresol; und/oder jeweils deren sulfonierten oder sulfomethylierten Derivaten), und resultierende Kondensate, jeweils wie unten und in den Ansprüchen näher dargelegt. Das führt zu speziellen proteinmodifizierten polyphenolischen Verbindungen (Kondensaten) mit Sulfonsäuregruppen und freien phenolischen OH-Gruppen.

In einer ersten Variante betrifft die Erfindung einen Gerbstoff, umfassend als gerbende Komponente eine synthetische peptidmodifizierte polyphenolische Gerbstoffzusammensetzung, welche erhältlich ist, indem
(i) ein Hydrolysat mittels einer basischen, enzymatischen oder sauren Hydrolyse von peptid- und/oder proteinhaltigen Materialien hergestellt und mit - durch eine Kondensation (= aus einer separaten Kondensation) eines Aldehydes mit einer Sulfonsäuregruppen (-SO₃H) (*oder* gegebenenfalls Sulfonyl- und Sulfonsäuregruppen) beinhaltenden (vorzugsweise monomeren) aromatischen Verbindung in freier und/oder Salzform erhaltenen - Sulfonsäuregruppen (oder gegebenenfalls Sulfonyl- und Sulfonsäuregruppen) beinhaltenden (quasi vorab-) kondensierten aromatischen Verbindung (kann auch als Oligomer oder Präpolymer bezeichnet werden) in freier und/oder Salzform versetzt wird, und das Gemisch einer (weiteren) Kondensation mit einem Aldehyd zu einem Kondensat, der synthetischen peptidmodifizierten polyphenolischen Gerbstoffzusammensetzung, unterzogen wird, oder
(ii) ein Kondensat, erhältlich, indem ein peptid- und/oder proteinhaltiges Material in einem ersten Schritt einer Vorbehandlung (vorzugsweise saure Hydrolyse) mittels einer Sulfonsäuregruppen (oder gegebenenfalls Sulfonyl- und Sulfonsäuregruppen) beinhaltenden monomeren aromatischen Verbindung und einer ersten Kondensation zu einem Vorkondensat in Gegenwart eines (zugesetzten) Aldehyds oder einer Kombination von Aldehyd und Harnstoff unterzogen wird, und in einem zweiten Schritt das Vorkondensat anschließend mit einem Aldehyd und einer weiteren, monomeren aromatischen Verbindung insbesondere in Form von Phenol oder einem Phenolderivat und/oder mit mindestens einer monomeren Sulfonsäuregruppen (oder gegebenenfalls Sulfonyl- und Sulfonsäuregruppen) beinhaltenden aromatischen Verbindung, in freier und/oder Salzform, einer weiteren Kondensation unterzogen wird,
   oder
(iii) ein Hydrolysat mittels einer basischen, enzymatischen oder sauren Hydrolyse von peptid- und/oder proteinhaltigen Materialien )vorzugsweise mit der Maßgabe, dass die Hydrolyse nicht mit Phenolsulfonsäure durchgeführt wird), hergestellt und dann mit einer Sulfonsäuregruppen (oder gegebenenfalls Sulfonyl- und Sulfonsäuregruppen) beinhaltenden monomeren aromatischen Verbindung in freier und/oder Salzform versetzt wird, und das Gemisch einer Kondensation mit einem Aldehyd zu einem Kondensat unterzogen wird,
wobei das molare Verhältnis von Sulfonyl- zu Hydroxygruppen in den erhältlichen polyphenolischen Gerbstoffzusammensetzungen im Falle (iii), oder in einer weiteren Ausführungsform der Erfindung in allen Fällen, vorzugsweise bei 1 : > 1.1 liegt.

Eine besondere Ausführungsform der Erfindung bezieht sich auf einen Gerbstoff gemäß dem vorstehenden Absatz, dadurch gekennzeichnet, dass in der resultierenden synthetischen peptidmodifizierten polyphenolischen Gerbstoffzusammensetzung ein Verhältnis von den (aromatisch gebundenen) Sulfonsäure-Gruppen zu (phenolischen) Hydroxygruppen von 1 : ≥1,2 und ganz besonders von 1 : ≥ 1,5, vorliegt, vorzugsweise ein Verhältnis von 1 : 1,5 bis 1 : 2,5, insbesondere 1 : 1,7 bis 1 : 2,2, ganz besonders 1 : 1,8 bis 1 : 2, z.B. 1 : 1.8. Dieses Verhältnis wird auf Basis der Stöchiometrie der Edukte rechnerisch bestimmt (als Äquivalenzverhältnis). Überraschend findet sich in diesem Bereich eine nützliche Gerbwirkung.

Eine bevorzugte Ausführungsform der Erfindung betrifft einen Gerbstoff gemäß einem der vorstehenden beiden Absätze, wobei eine saure Hydrolyse der Peptid- und/oder proteinhaltigen Materialien in Gegenwart einer Sulfonsäuregruppen beinhaltenden aromatischen Verbindung erfolgt.

Eine weitere bevorzugte Ausführungsform der Erfindung betrifft einen Gerbstoff erhältlich gemäß dem ersten oder zweiten vorstehenden Absatz, wobei das Hydrolysat der peptid- und/oder proteinhaltigen Materialien vor der abschließenden Kondensation mit einem Phenol und/oder Phenolderivat oder der Sulfonsäuregruppen beinhaltenden vorkondensierten aromatischen Verbindung, oder Salzen davon, vermischt und dann in Gegenwart eines Aldehyds der abschließenden Kondensation unterzogen werden.

Eine weitere besondere Ausführungsform der Erfindung betrifft Gerbstoffe erhältlich gemäß einem der vorstehenden vier Absätze, dadurch gekennzeichnet, dass als Sulfonsäure-gruppen beinhaltende aromatische Verbindung eine solche ausgewählt aus mindestens teilweise Sulfonsäuregruppen tragendem Phenol, Kresol, Ditolylether, Dihydroxydiphenylsulfon, Naphthalin, Naphthol, Brenzcatechin, Resorcin, Hydrochinon, Hydroxyhydrochinon, Phloroglucin, Pyrogallol, oder jeweils einem sulfomethylierten Derivat davon; oder zwei oder mehr dieser Verbindungen ausgewählt sind, und/oder als Phenol oder Phenolderivat Phenol oder ein Phenolderivat ausgewählt aus Kresol, Dihydroxydiphenylsulfon, Naphthol, Brenzcatechin, Resorcin, Hydrochinon, Hydroxyhydrochinon, Phloroglucin und Pyrogallol, oder zwei oder mehr der genannten Phenole, verwendet wird oder werden.

Eine weitere besondere Ausführungsform der Erfindung betrifft einen Gerbstoff erhältlich gemäß einem der vorstehenden fünf Absätze, wobei als Sulfonsäuregruppen beinhaltende aromatische Verbindung sulfomethyliertes Dihydroxydiphenylsulfon oder Phenolsulfonsäure, oder als Phenol Phenol selbst verwendet wird.

Eine weitere bevorzugte Ausführungsform der Erfindung Gerbstoff erhältlich gemäß einem der vorstehenden sechs Absätze, wobei als Aldehyd ein oder mehrere ausgewählt aus aliphatischen Aldehyden oder Acetalen verwendet werden.

Noch eine weitere besondere Ausführungsform der Erfindung betrifft einen Gerbstoff erhältlich gemäß dem unmittelbar vorstehenden Absatz, wobei der oder die Aldehyde aus Formaldehyd, Trioxan, Paraformaldehyd, Acetaldehyd, Propionaldehyd, Glutaraldehyd, Glyoxal und Glutardialdehyd, oder einem Acetal hiervon mit einer Alkoholkomponente ausgewählt aus Methanol, Ethanol, Diethylenglykol und Triethylenglykol, ausgewählt ist oder sind, vorzugsweise aus Glutardialdehyd oder insbesondere aus Formaldehyd oder Glyoxal; oder Mischungen davon.

Noch eine besondere Ausführungsform der Erfindung betrifft einen Gerbstoff erhältlich gemäß einem der acht vorstehenden Absätze, dadurch gekennzeichnet, dass als peptid- und/oder proteinhaltiges Material ein Produkt der basischen Hydrolyse von Lederfalzspänen, insbesondere aus der Gerbung von Leder mit Glutardialdehyd, nach anschließender Neutralisierung mit einer Säure, vorzugsweise Schwefelsäure; als Sulfonsäuregruppen beinhaltende aromatische Verbindung(en), oder Salze davon, sulfoniertes Dihydroxydiphenylsulfon und/oder Phenolsulfonsäure; und als Aldehyd Glutardialdehyd und/oder insbesondere Formaldehyd eingesetzt ist.

Eine Variante der Erfindung betrifft eine wässrige Lösung eines Gerbstoffes nach einem der vorstehenden neun Absätze. Lösung kann dabei Lösung (dann im wesentlichen klar) oder Dispersion (dann trüb) bedeuten.

Eine weitere Variante der Erfindung betrifft eine trockene, insbesondere pulverförmige oder granulierte Form eines Gerbstoffes nach einem der vor dem letzten Absatz stehenden neun Absätze. Diese trockene Form kann durch Evaporieren oder insbesondere Sprühtrocknung oder dergleichen hergestellt werden. Sie kann als solche einer wässrigen Lösung oder zu gerbenden Materialien in wässrigen Medien zugesetzt werden, um so eine wässrige Lösung eines Gerbstoffes gemäß dem vorstehenden Absatz zu erhalten, oder direkt dem zu gerbenden Material in wässriger Lösung zugesetzt werden.

Die Erfindung betrifft auch ein Verfahren zur Gerbung von Materialien ausgewählt aus Tierhäuten und Tierfellen, insbesondere Blößen, wobei zu den im sauren Bereich gepickelten Materialien in Pickelflotte, vorzugsweise in Gegenwart eines methylenverknüpften Kondensationsproduktes von aromatischen Sulfonsäuren, ein Gerbstoff nach einem Absatz ausgewählt aus dem ersten bis neunten vorstehenden Absatz (z.B. als Pulver, etwa nach Sprühtrocknen) verwendet wird oder eine wässrige Lösung eines Gerbstoffes gemäß dem zweitletzten vorstehenden Absatz oder eine trockene Form des Gerbstoffes gemäß dem letzten vorstehenden Absatz zugesetzt und einwirken gelassen wird und das Leder dann ausgeladen wird.

Die Erfindung betrifft auch ein Verfahren zur Nachgerbung eines Leder-Halbfabrikates, insbesondere nach Gerbung mit Glutaraldehyd, wobei das vorbereitete Leder-Halbfabrikat mit einem neutralisierenden methylenverknüpften Kondensationsprodukt, einem Fettungsmittel, einem dispergierenden Syntan und einem Gerbstoff nach einem Absatz ausgewählt aus dem ersten bis neunten vorstehenden Absatz oder insbesondere einer wässrigen Lösung eines Gerbstoffes gemäß dem drittletzten vorstehenden Absatz oder einer trockenen Form des Gerbstoffes gemäß dem zweitletzten vorstehenden Absatz behandelt und gewünschtenfalls mit einem Fettungsmittel und/oder einem polymeren Weichmacher behandelt und der pH-Wert der Flotte mit einer organischen Säure, insbesondere Ameisensäure, eingestellt wird und nach Wasserbehandlung getrocknet und gegebenenfalls gemillt wird.

Ein weiterer Erfindungsgegenstand betrifft ein Leder, insbesondere Crust-Leder, herstellbar oder insbesondere hergestellt nach einem Verfahren, das die Verfahrensschritte gemäß einem der beiden direkt vorstehenden Absätze beinhaltet.

Schließlich betrifft die Erfindung auch ein Verfahren zur Herstellung eines Gerbstoffes gemäß einem Absatz ausgewählt aus dem ersten bis neunten vorstehenden Absatz oder einer wässrigen Lösung gemäß dem zehnten vorstehenden Absatz oder eine trockene Form des Gerbstoffes nach dem elften vorstehenden Absatz, dadurch gekennzeichnet, dass es die Verfahrensschritte und Reagentien gemäß einem der genannten Absätze oder insbesondere wie nachstehend definiert umfasst.

Die Erfindung betrifft in einer Variante auch einen Gerbstoff wie vorstehend definiert, welcher in wässriger Lösung oder auch trockener Form, z.B. in Pulverform oder als Granulat, z.B. sprühgetrocknet, vorliegt.

Eine Erfindungsvariante betrifft einen erfindungsgemäß hergestellten Gerbstoff erhältlich nach einem der Ansprüche 1 bis 9, bzw. in den übrigen Ansprüchen genannte Erfindungsgegenstände, wobei die peptid- und/oder proteinhaltigen Materialien durch (vorzugsweise basische) Hydrolyse von Lederfalzspänen, insbesondere resultierend aus der Chromgerbung oder insbesondere der Gerbung mit Glutardialdehyd, hergestellt sind.

Für alle Ausführungsformen dienen folgende Definitionen einer Bestimmung bevorzugter Erfindungsgegenstände, indem ein oder mehrere oder alle breiteren Begriffe des jeweiligen Erfindungsgegenstandes (Variante, Ausführungsform) durch den oder die genauer definierten Begriffe ersetzt werden:
Beispiele für Aldehyde (aldehydische Verbindungen) sind vor allem aliphatische Aldehyde oder Acetale davon, wie insbesondere Formaldehyd (wobei dieser Begriff auch Vorläufer wie Trioxan oder Paraformaldehyd einschließen kann), oder Verbindungen ausgewählt aus Acetaldehyd, Propionaldehyd, Glutaraldehyd, insbesondere Glutardialdehyd, und/oder Glyoxal, oder ein Acetal einer solchen Verbindung, oder Mischungen von zwei oder mehr solchen Acetalen. Als Acetal kommt insbesondere ein solches in Betracht, das eine Alkoholkomponente ausgewählt aus Methanol, Ethanol, Diethylenglykol und/oder Triethylenyglykol beinhaltet, oder ein Gemisch, welches zwei oder mehr der genannten Alkoholkomponenten beinhaltet. Besonders bevorzugt sind Glyoxal, Formaldehyd (besonders bevorzugt) oder ferner Glutardialdehyd.

Unter einem Hydrolysat von oder erhalten aus eine basischen, enzymatischen oder sauren Hydrolyse erhaltenen peptid- und/oder proteinhaltigen (polypeptidischen) Materialien werden hierbei alle Arten von Hydrolysaten verstanden, welche durch Hydrolyse von proteinhaltigen Materialien durch an sich bekannte alkalische, enzymatische oder saure Hydrolyse hergestellt werden. Die saure Hydrolyse umfasst dabei auch die Hydrolyse mit Hilfe von sulfonierten, aromatischen Molekülen (insbesondere in Variante (ii) wie oben genannt). Beispiele für proteinhaltige Materialien sind unter anderem Lederfalzspäne, Lederstücke, Knochenleim, Haare, Federn, Horn und Soja.

Bei Lederfalzspänen handelt es sich um ein kollagenhaltiges Material, welches nach der Gerbung von Leder bei der Einstellung der Dicke, dem sogenannten Falzen, anfällt.

Die Herstellung der Kondensate kann dabei, allgemeiner und vereinfacht beschrieben, auf unterschiedliche erfindungsgemäße Arten erfolgen:
1. Die polypeptidische Polymerkomponente wird direkt mit Hilfe von sauren aromatischen Verbindungen hydrolysiert und anschließend erneut kondensiert. Teil der Monomere wird zum Hydrolysieren verwendet, dann damit kondensiert in bestimmtem Molverhältnis.
2. Die polypeptidische Polymerkomponente wird hydrolysiert und anschließend mit kondensierten aromatischen Verbindungen vermischt und "erneut" kondensiert.
3. Die polypeptidische Polymerkomponente wird durch an sich bekannte alkalische, enzymatische oder saure Verfahren hydrolysiert (vorzugsweise außer der Variante in CN 105586444 B mit Phenylsulfonsäure selbst) und anschließend vor der Kondensation mit (monomeren) aromatischen Verbindungen vermischt und dann kondensiert; hierbei wird vorzugsweise ein Verhältnis von Sulfonsäuregruppen zu Phenolgruppen im Produkt von 1 : ≥ 1.1 eingestellt.

(Monomere) aromatische Verbindungen sind in erster Linie ein, zwei oder drei (dann z.B. kondensierte oder über z.B. -CH₂- oder -SO₂- Brücken verbundene) aromatische Ringe mit jeweils 6 bis 12 Ringkohlenstoffatomen beinhaltende Verbindungen, beispielweise Phenol, Kresol (z.B. o-, m- oder p-Kresol oder Gemische davon), Ditolylether, Naphthalin, Naphthol, Brenzcatechin, Resorcin, Hydrochinon, Hydroxyhydrochinon, Phloroglucin, Pyrogallol, o-Kresol, m-Kresol oder p-Kresol, und/oder jeweils deren Sulfonsäuregruppen (z.B. -SO₃H oder -CH₂SO₃H) tragende sulfonierte oder sulfomethylierte Derivate, oder auch Mischungen von zwei oder mehr solcher aromatischen Verbindungen. Beispiele sind eine Mischung aus Phenol und Phenolsulfonsäure oder Phenol und Sulfonsäuregruppe(n) tragendem (z.B. sulfonyliertem oder methylsulfonyliertem) Dihydroxydiphenylsulfon.

Phenolderivate sind ein oder mehrere Hydroxylgruppen am aromatischen Ring tragende Verbindungen, in erster Linie mit ein, zwei oder drei (dann z.B. kondensierte oder über z.B. - CH₂- oder -SO₂- Brücken verbundene) aromatischen Ringen mit jeweils 6 bis 12 Ringkohlenstoffatomen, beinhaltende Verbindungen (außer Phenol selbst, das kein "Derivat" ist), beispielsweise Kresol, Naphthol, Brenzcatechin, Resorcin, Hydrochinon, Hydroxyhydrochinon, Phloroglucin, Pyrogallol, o-Kresol, m-Kresol, p-Kresol, ferner Bisphenole; oder Mischungen von zwei oder mehr davon.

Aromatische Verbindungen können als Monomere vorliegen oder schon in einem vorangegangenen Schritt durch Kondensation mit Aldehyden zu größeren Molekülen (als Vorkondensate, Oligomere oder Präpolymere bezeichenbar, die insbesondere über -CH₂-Gruppen verbundene aromatische Ringe enthalten) kondensiert worden sein. Auch hier kann das Kondensat aus Einzelsubstanzen, oder auch aus gemischten Kondensaten, bestehen, wie zum Beispiel hergestellt aus Napthalinsulfonsäure und/oder Dihydroxydiphenylsulfon-Kondensaten, beide vorzugsweise in sulfonierter oder sulfomethylierter Form, mit Aldehyden.

Die Kondensation von polypeptidischer Polymerkomponente und aromatischen Molekülen kann auch in mehreren Stufen erfolgen. Beispielweise erfolgt zunächst die Auflösung der Polypeptidische Polymerkomponente mit Hilfe von sulfonierten aromatischen Molekülen wie Benzolsulfonsäure, danach wird mit einem Aldehyd kondensiert (analog CN 105586444 B), anschließend jedoch werden weitere aromatische Verbindungen zugegeben und es wird nochmal mit einem Aldehyd kondensiert.

Damit die so hergestellten Syntane (synthetische peptidmodifizierte polyphenolische Gerbstoffzusammensetzung) eine Gerbwirkung haben, erkennbar an der Erhöhung der Schrumpfungstemperatur gemessen nach DIN 53336:1977-01 der mit diesen Stoffen gegerbten Leder, ist im Syntan das Vorhandensein von sowohl Sulfonsäure- als auch freien phenolischen Hydroxygruppen erforderlich, vorzugsweise ein Verhältnis von den Sulfonsäure-Gruppen zu phenolischen Hydroxygruppen von 1 : >1, vorzugsweise von 1 : >1,1, besonders von 1 : ≥1,2 und ganz besonders von 1 : ≥ 1,5 in den aromatischen Molekülen bevorzugt oder insbesondere bindend gegeben. Die Obergrenze ist nicht zwingend fest definiert, die Gerbwirkung nimmt mit zunehmendem Hydroxyanteil weiter zu, jedoch nimmt die Wasserlöslichkeit ab. Vorzugsweise liegt das Verhältnis bei 1 : 1,5 bis 1 : 2,5, insbesondere 1 : 1,8 bis 1 : 2,2, ganz besonders 1 : 2.

Die polypeptidischen Polymerkomponenten weisen vorzugsweise ein durchschnittliches Molekulargewicht zwischen ca. 1000 g/mol und 8000 g/mol, bevorzugt zwischen 1000 g/mol und 5000 g/mol und ganz besonders bevorzugt zwischen 1000 g/mol und 3000 g/mol auf (Bestimmung mittels Gelchromatographie).

"Erhältlich" kann insbesondere durch "erhalten" ersetzt werden.

"Kondensation" bezieht sich insbesondere auf eine Kondensation unter Beteiligung phenolischer Aromaten in Gegenwart von Aldehyden und/oder Harnstoff.

"Ferner" charakterisiert Merkmale, die weniger bevorzugt sind als solche, denen dieses Attribut nicht vorangestellt ist.

Anhand der nachfolgenden Beispiele wird die Erfindung näher erläutert und spezielle Ausführungsformen der Erfindung beschrieben, ohne dass dadurch eine Einschränkung des Umfangs der Erfindung bewirkt werden soll.

### Beispiele

Für alle chemischen Synthesen wurde ein druckfester Reaktor mit Heiz-/Kühlkapazität verwendet. Der Reaktor war mit einem Rührer, einem Rückflusskühler, einem Thermometer, Stickstoffeinlass und Zufuhröffnungen ausgestattet. Alle Rohmaterialien wurden mit einer Genauigkeit von +/- 1 % eingewogen. Die kontinuierliche Zugabe der Reagenzien erfolgte über Pumpen. Der gesamte Lederherstellungsversuch wurde mit einer rotierenden Trommel in einer dem Fachmann bekannten Weise durchgeführt.

### Herstellung der polypeptidischen Polymerkomponente

Beispiel 1: Proteinhydrolysate wurden durch basische Hydrolyse von Lederfalzspänen (45 % Feststoffgehalt), kommend aus der Gerbung von Leder mit Glutardialdehyd, nach einem an sich bekannten Verfahren mit Hilfe von Natriumhydroxid bei erhöhten Temperaturen hergestellt. Anschließend wird das Proteinhydrolysat mit Schwefelsäure (96%ig) auf einen pH-Wert von 7 eingestellt. Die so hergestellten Proteinhydrolysate weisen einen Feststoffgehalt von 34% und ein durchschnittliches Molekulargewicht von 3000 g/mol auf.

### Herstellung beispielhafter kondensierter aromatischer Moleküle

Beispiel 2: Dihydroxydiphenylsulfon (55 %ige Suspension in Wasser) wird mit 1 Äquivalent Natriumbisulfit-Lösung (38%ig in Wasser) vermischt und mit Natriumhydroxid (50%ige Lösung in Wasser) der pH-Wert auf ≥ 8 eingestellt. Anschließend wird die resultierende Mischung auf 90°C erhitzt. Zu der heißen Mischung gibt man 3 Äquivalente Formaldehyd (30 % Lösung) und kondensiert für 3 h bei 130 - 140°C. Die entstehende Lösung hat einen pH-Wert von ca. 9 und einen Feststoffgehalt von ca. 38 %.

### Herstellung von beispielhaften Proteinmodifizierten Polyphenolischen Produkten

Beispiel 3: Zu 5925 g der nach Beispiel 2 hergestellten kondensierten aromatischen Moleküle werden 3664 g des unter Beispiel 1 hergestellten Proteinhydrolysates zugegeben. Danach wird auf 90°C erhitzt und mit 146 g Formaldehyd (30%ig in Wasser) 5 h kondensiert. Nach Abkühlen auf 75°C wird mit Schwefelsäure (96%ig) der pH-Wert auf 6 gestellt und weiter abgekühlt auf Raumtemperatur. Man erhält eine dunkelbraune Lösung mit einem Feststoffgehalt von 34% und einem Verhältnis von aromatisch gebundenem SO₃H zu OH von 1 : 1.8.

Beispiel 4: Zu 3230 g der nach Beispiel 2 hergestellten kondensierten aromatischen Moleküle werden 1998 g des unter Beispiel 1 hergestellten Proteinhydrolysates zugegeben. Danach wird auf 90°C erhitzt und mit 85 g Glutardialdehyd (50%ig in Wasser) 5 h kondensiert. Nach Abkühlen auf 50°C wird mit Schwefelsäure (96%ig) der pH-Wert auf 6 gestellt und weiter abgekühlt auf Raumtemperatur. Man erhält eine dunkelbraune Lösung mit einem Feststoffgehalt von 33% und einem Verhältnis von aromatisch gebundenem SO₃H zu OH von 1 : 1.8.

Beispiel 5: Zu 416 g Phenolsulfonsäure (65%ig in Wasser) werden 125 g Falzspäne (45% Feststoffgehalt) kommend aus der Gerbung mit Glutardialdehyd zugegeben und bei 70° C 2 h gerührt. Anschließend wird auf 50° C abgekühlt und 196 g Harnstoff (50%ige Lösung in Wasser) und 230 g Formaldehyd (30%ig Lösung in Wasser) zugegeben, auf 85° C erhitzt und 1 h gerührt. Danach wird auf 50 ° C abgekühlt, und es werden 106 g Phenol und 100 g Formaldehyd (30%ig in Wasser) zugegeben. Nach Aufheizen auf 60 °C wird 1 h gerührt. Nach Abkühlen auf Raumtemperatur wird mit Natriumhydroxid (50%ige Lösung in Wasser) der pH-Wert auf > 3 eingestellt. Man erhält eine braune Lösung mit einem Feststoffgehalt von 48 % und einem Verhältnis von aromatisch gebundenem SO₃H zu OH von 1 : 1.8

### Anwendungstechnische Beispiele unter Verwendung der Polyphenolischen Produkten

### Anwendungsbeispiel 1: Gerbung

Als Ausgangsmaterial werden nach dem Äscher gespaltene und gewogene Blößen (Rind) eingesetzt, deren Dicke ca. 1,8-2,0 mm beträgt. Alle folgenden Chemikalien-Einsatzmengen beziehen sich auf dieses Bezugsgewicht (Blößengewicht). Nach dem Fachmann bekannten, üblichen vorbereitenden Arbeiten wird zu den bei pH 2,8 gepickelten Blößen (= 100 %) in 50% Pickelflotte, 4% eines Methylenverknüpften Kondensationsproduktes von aromatischen Sulfonsäuren (Tanigan^{®} RFS, Handelsprodukt von Lanxess) und 36% des nach Beispiel 3 hergestellten Proteinmodifizierten Polyphenolischen Produktes zugegeben und 3 h einwirken gelassen. Nach Ausladen der Leder wird die Schrumpfungstemperatur gemessen, welche bei 71° C lag.

### Anwendungsbeispiel 2: Gerbung

Wie Anwendungsbeispiel 1, nur diesmal mit 36% des nach Beispiel 4 hergestellten Proteinmodifizierten Polyphenolischen Produktes: Die Schrumpfungstemperatur war 70° C.

### Anwendungsbeispiel 3: Gerbung

Wie Anwendungsbeispiel 1, nur diesmal mit 25% des nach Beispiel 4 hergestellten Proteinmodifizierten Polyphenolischen Produktes: Die Schrumpfungstemperatur war 72° C.

### Anwendungsbeispiel 4: Nachgerbung

Zu auf 1,1 mm Dicke gefalzten Leder-Halbfabrikaten basierend auf der Gerbung mit Glutardialdehyd (wet white) wird nach dem Fachmann bekannten, üblichen vorbereitenden Arbeiten wie Waschen, neben einem langsam neutralisierenden Syntan (Tanigan^{®}PAK der LANXESS Deutschland GmbH), einem handelsüblichen Fettungsmittel und einem dispergierenden Synthan (Tanigan^{®}PR der LANXESS Deutschland GmbH) das nach Beispiel 3 hergestellte proteinmodifizierte Polyphenols als Lösung zugegeben und für 230 min behandelt. Danach wurde noch ein handelsübliches Fettungsmittel und zwei polymere Weichmacher (Lubritan^{®}SPE und Levotan^{®}LS der LANXESS Deutschland GmbH) hinzugefügt. Abschließend wurde Wasser bei 50° C zugegeben und mit Ameisensäure (85%ig in Wasser) der pH-Wert der Flotte auf pH 3,4 eingestellt.

In Tabelle 1 sind die Verfahrensschritte des erfindungsgemäßen Verfahrens zur Herstellung 5 von Crust-Leder dargestellt (die Gew.-% beziehen sich auf das Falzgewicht).

### Material: wet white, gefalzt, Dicke 1,0-1,1 mm

| Prozess | % | Chemikalien | Teile Material : Teile Wasser (w/w) | min | Bemerkungen |
|---|---|---|---|---|---|
| | 100 | Wasser 40 °C | | | |
| | 1,0 | TANIGAN PAK | | | |
| | 4,0 | Handelsübliches Fettungsmittel | 1:8 | 30 | pH 4,0 |
| | 2,0 | TANIGAN PR | | | |
| | **60,0** | **Produkt aus Beispiel 3** | | 200 | pH 5,6 |
| | | | | | |
| + | 2,0 | Handelsübliches Fettungsmittel | | 180 | |
| | 3,0 | LUBRITAN SPE | | | |
| | 3,0 | LEVOTAN LS | 1:8 | 60 | |
| | 100 | Wasser 50 °C | | | Aufheizen auf 50 °C |
| | 1,5 | Ameisensäure 85 % | 1:5 | 15 | |
| | 3,0 | Ameisensäure 85 % | 1:5 | 45 | |
| pH | | | | | Flotte ablassen |
| + | | | | 45 | |
| | 300 | Wasser 50 °C | | 10 | Flotte ablassen |
| | 300 | Wasser 20 °C | | 10 | Flotte ablassen |
| | | | | | |
| Vakuumtrocknung, Millen | | | | | |
| | | | | | |

Die so hergestellten Crust-Leder zeichnen sich besonders durch eine ausgezeichnete Fülle und Festnarbigkeit aus.

### Anwendungsbeispiel 5: Nachgerbung

Wie Anwendungsbeispiel 4, nur diesmal mit 40% des unter Beispiel 5 hergestellten Proteinmodifizierten Polyphenolischen Produktes. Die so hergestellten Crust-Leder zeichnen sich besonders durch eine ausgezeichnete Fülle und Festnarbigkeit aus.

### Vergleichsbeispiel 6: Nachgerbung

Wie Anwendungsbeispiel 4, nur diesmal mit 40% eines Handelsüblichen flüssigen Synthans mit einem Feststoffgehalt von 50% (Tanigan^{®}BN liq. der LANXESS Deutschland GmbH).

Die so hergestellten Crust-Leder haben weniger Fülle und etwas geringere Festnarbigkeit als die unter Verwendung des Proteinmodifizierten Polyphenolischen Produktes erhaltenen.

## Patentansprüche

1. Gerbstoff, umfassend als gerbende Komponente eine synthetische peptidmodifizierte polyphenolische Gerbstoffzusammensetzung, erhältlich indem
(i) ein Hydrolysat mittels einer basischen, enzymatischen oder sauren Hydrolyse von peptid- und/oder proteinhaltigen Materialien hergestellt und mit
- durch eine Kondensation eines Aldehydes mit einer Sulfonsäuregruppen beinhaltenden aromatischen Verbindung in freier und/oder Salzform erhaltenen - Sulfonsäuregruppen beinhaltenden kondensierten aromatischen Verbindung in freier und/oder Salzform
versetzt wird, und
das Gemisch einer Kondensation mit einem Aldehyd zu einem Kondensat, der synthetischen peptidmodifizierten polyphenolischen Gerbstoffzusammensetzung, unterzogen wird,
oder
(ii) ein Kondensat, erhältlich, indem ein peptid- und/oder proteinhaltiges Material
in einem ersten Schritt einer Vorbehandlung mittels einer Sulfonsäuregruppen beinhaltenden monomeren aromatischen Verbindung und einer ersten Kondensation zu einem Vorkondensat in Gegenwart eines Aldehyds oder einer Kombination von Aldehyd und Harnstoff unterzogen wird, und
in einem zweiten Schritt das Vorkondensat anschließend mit einem Aldehyd und einer weiteren, monomeren aromatischen Verbindung in Form von Phenol und/oder einem Phenolderivat und/oder mit mindestens einer monomeren Sulfonsäuregruppen beinhaltenden aromatischen Verbindung, in freier und/oder Salzform, einer weiteren Kondensation unterzogen wird,
oder ferner
(iii) ein Hydrolysat mittels einer basischen, enzymatischen oder sauren Hydrolyse von peptid- und/oder proteinhaltigen Materialien hergestellt und dann mit einer Sulfonsäure- oder Sulfonyl- und Sulfonsäuregruppen beinhaltenden monomeren aromatischen Verbindung in freier und/oder Salzform versetzt wird, und das Gemisch einer Kondensation mit einem Aldehyd zu einem Kondensat unterzogen wird,
wobei das molare Verhältnis von Sulfonyl- zu Hydroxygruppen in den erhältlichen polyphenolischen Gerbstoffzusammensetzungen im Falle von (iii) vorzugsweise bei 1 : > 1.1 liegt.

2. Gerbstoff nach Anspruch 1, **dadurch gekennzeichnet, dass** in der synthetischen peptidmodifizierten polyphenolischen Gerbstoffzusammensetzung ein Verhältnis von den Sulfonsäure-Gruppen zu phenolischen Hydroxygruppen von 1 : ≥1,2 und ganz besonders von 1 : ≥ 1,5, vorliegt, vorzugsweise ein Verhältnis von 1 : 1,5 bis 1 : 2,5, insbesondere 1 : 1,7 bis 1 : 2,2, ganz besonders 1 : 1,6 bis 1 : 2.

3. Gerbstoff nach Anspruch 1 oder 2, wobei eine saure Hydrolyse der Peptid- und/oder proteinhaltigen Materialien in Gegenwart einer Sulfonsäuregruppen beinhaltenden aromatischen Verbindung erfolgt.

4. Gerbstoff erhältlich nach Anspruch 1 oder 2, wobei das Hydrolysat der peptid- und/oder proteinhaltigen Materialien vor der abschließenden Kondensation mit einem Phenol oder Phenolderivat oder der Sulfonsäuregruppen beinhaltenden vorkondensierten aromatischen Verbindung, oder Salzen davon, vermischt und dann in Gegenwart eines Aldehyds der abschließenden Kondensation unterzogen werden.

5. Gerbstoffe erhältlich nach einem der Ansprüche 1 bis 4, **dadurch gekennzeichnet, dass** als Sulfonylgruppen beinhaltende aromatische Verbindung eine solche ausgewählt aus mindestens teilweise Sulfonsäuregruppen tragendem Phenol, Kresol, Ditolylether, Dihydroxydiphenylsulfon, Naphthalin, Naphthol, Brenzcatechin, Resorcin, Hydrochinon, Hydroxyhydrochinon, Phloroglucin, Pyrogallol, oder jeweils einem sulfomethylierten Derivat davon; oder zwei oder mehr dieser Verbindungen ausgewählt sind, und/oder als Phenol oder Phenolderivat ein solches ausgewählt aus Phenol oder einem Phenolderivat ausgewählt aus Kresol, Ditolylether, Dihydroxydiphenylsulfon, Naphthalin, Naphthol, Brenzcatechin, Resorcin, Hydrochinon, Hydroxyhydrochinon, Phloroglucin und Pyrogallol, oder zwei oder mehr der genannten Phenole, oder jeweils Mischungen von zwei oder mehr davon,verwendet wird oder werden.

6. Gerbstoff erhältlich nach einem der Ansprüche 1 bis 5, wobei als Sulfonsäuregruppen beinhaltende aromatische Verbindung sulfomethyliertes Dihydroxydiphenylsulfon oder Phenolsulfonsäure, als Phenol Phenol selbst verwendet wird.

7. Gerbstoff erhältlich nach einem der Ansprüche 1 bis 6, wobei als Aldehyd ein oder mehrere ausgewählt aus aliphatischen Aldehyden oder Acetalen verwendet werden.

8. Gerbstoff erhältlich nach Anspruch 7, wobei der oder die Aldehyde aus Formaldehyd, Trioxan, Paraformaldehyd, Acetaldehyd, Propionaldehyd, Glutaraldehyd, Glyoxal und Glutardialdehyd, oder einem Acetal hiervon mit einer Alkoholkomponente ausgewählt aus Methanol, Ethanol, Diethylenglykol und Triethylenglykol, ausgewählt ist oder sind, vorzugsweise aus Glutardialdehyd oder insbesondere aus Formaldehyd oder Glyoxal, oder jeweils Mischungen davon.

9. Gerbstoff erhältlich nach einem der vorstehenden Ansprüche, **dadurch gekennzeichnet, dass** als peptid- und/oder proteinhaltiges Material ein Produkt der basischen Hydrolyse von Lederfalzspänen, insbesondere aus der Gerbung von Leder mit Glutardialdehyd, erforderlichenfalls nach anschließender Neutralisierung mit einer Säure, vorzugsweise Schwefelsäure; als Sulfonsäuregruppen beinhaltende aromatische Verbindung(en), oder Salze davon, sulfoniertes Dihydroxydiphenylsulfon und/oder Phenolsulfonsäure; und als Aldehyd Glutardialdehyd oder Formaldehyd eingesetzt ist.

10. Wässrige Lösung eines Gerbstoffes nach einem der Ansprüche 1 bis 9.

11. Trockene, insbesondere pulverförmige oder granulierte Form eines Gerbstoffes nach einem der Ansprüche 1 bis 9.

12. Verfahren zur Gerbung von Materialien ausgewählt aus Tierhäuten und Tierfellen, insbesondere Blößen, wobei zu den im sauren Bereich gepickelten Materialien in Pickelflotte, vorzugsweise in Gegenwart eines methylenverknüpften Kondensationsproduktes von aromatischen Sulfonsäuren, ein Gerbstoff nach einem der Ansprüche 1 bis 9 verwendet wird oder insbesondere eine wässrige Lösung eines Gerbstoffes nach Anspruch 10 oder eine trockene Form eines Gerbstoffes nach Anspruch 11 zugesetzt und einwirken gelassen wird und das Leder dann ausgeladen wird.

13. Verfahren zur Nachgerbung eines Leder-Halbfabrikates, insbesondere nach Gerbung mit Glutaraldehyd, wobei das vorbereitete Leder-Halbfabrikat mit einem neutralisierenden methylenverknüpften Kondensationsprodukt, einem Fettungsmittel, einem dispergierenden Syntan und einem Gerbstoff nach einem der Ansprüche 1 bis 9 oder insbesondere einer wässrigen Lösung eines Gerbstoffes nach Anspruch 10 oder unter Zusatz einer trockenen Form eines Gerbstoffe nach Anspruch 11 behandelt, gewünschtenfalls mit einem Fettungsmittel und/oder einem polymeren Weichmacher behandelt und der pH-Wert der Flotte mit einer organischen Säure, insbesondere Ameisensäure, eingestellt wird und nach Wasserbehandlung getrocknet und gegebenenfalls gemillt wird.

14. Leder, insbesondere Crust-Leder, herstellbar oder insbesondere hergestellt nach einem Verfahren, das die Verfahrensschritte nach Anspruch 12 oder 13 beinhaltet.

15. Verfahren zur Herstellung eines Gerbstoffes nach einem der Ansprüche 1 bis 9, oder einer wässrigen Lösung nach Anspruch 10 oder einer trockenen Form eines Gerbstoffes nach Anspruch 11, **dadurch gekennzeichnet, dass** es die Verfahrensschritte und Reagentien gemäß einem der genannten Ansprüche umfasst.
